# EUROPÄISCHE PATENTSCHRIFT

(11) **EP 4 174 307 B1**
(45) Veröffentlichungstag und Bekanntmachung des Hinweises auf die Patenterteilung: **10.09.2025**
(21) Anmeldenummer: 22201227.0
(22) Anmeldetag: 13.10.2022
(51) Int. Cl.: F03B 11/06, H02K 7/18, H02K 5/173, H02K 7/08

(54) **ROTORLAGERUNGSANORDNUNG FÜR STRÖMUNGSKRAFTANLAGE**
ROTOR BEARING ASSEMBLY FOR A FLUID POWER PLANT
AGENCEMENT DE PALIER DE ROTOR POUR CENTRALE ÉLECTRIQUE À FLUX

(30) Priorität: 25.10.2021 DE 102021211984
(43) Veröffentlichungstag der Anmeldung: 03.05.2023
(73) Patentinhaber: Aktiebolaget SKF, 415 50 Göteborg (SE)
(72) Erfinder: Baumann, Michael, 97503 Gädheim (DE); Hofmann, Matthias, 97422 Schweinfurt (DE)
(74) Vertreter: Kuhstrebe, Jochen

(56) Entgegenhaltungen:
- EP-A1- 3 628 858
- WO-A2-2008/031426
- DE-A1- 102014 201 465

## Beschreibung

Vorliegende Erfindung betrifft einen Generator mit einer Rotorlagerungsanordnung für ein Strömungskraftwerk.

Bei Strömungskraftwerken, wie bspw. Gezeitenkraftwerken oder Kraftwerken, die in Flüssen eingesetzt werden, aber auch bei Windkraftanlagen, kommen Generatoren zum Einsatz, die im Fall von Gezeitenkraftwerken oder Wasserkraftwerken vollständig in das strömende Gewässer eingetaucht werden und oft mit dem umgebenden Wasser gekühlt werden. Dabei kommen insbesondere Generatoren zum Einsatz, bei denen der Stator von einem Gehäuse getragen wird und der Rotor auf einem mit dem Gehäuse drehfest verbundenen stationären Achszapfen gelagert werden muss. Um dieses Lager vor dem umgebenden Wasser und/oder vor Verunreinigungen zu schützen, wird das Lager mithilfe spezieller Dichtungen, wie bspw. einer Seewasserdichtung abgedichtet, die mit dem Achszapfen zusammenwirkt.

Lager an sich, insbesondere für Windkraftanlagen - siehe DE102014201465 A1, oder Wasserturbinen - siehe WO2008/031426 A2 oder EP3628858 A1, sind zwar bekannt, problematisch bei derartigen Anordnungen ist jedoch, dass beispielswese bei einer Wartung des Lagers eine aufwendige Demontage der Bauteile, insbesondere der Dichtungsanordnung oder Gehäuseteile, notwendig ist, bei der zudem Wasser in den empfindlichen Lagerinnenraum eindringen kann, was zu einer erhöhten Korrosion führen kann.

Es ist deshalb Aufgabe vorliegender Erfindung, einen Generator für ein Strömungskraftwerk mit einer Rotorlagerungsanordnung bereitzustellen, die einfach und schnell montierbar und demontierbar ist, und bei der der Lagerinnenraum zuverlässig vor einem Eintritt von Wasser geschützt ist.

Diese Aufgabe wird durch einen Generator mit einer Rotorlagerungsanordnung gemäß Anspruch 1 gelöst.

Im Folgenden wird ein Generator für ein Strömungskraftwerk mit einem Stator und einem Innenläuferrotor, die in einem Gehäuse angeordnet sind, vorgestellt, wobei der Stator drehfest mit dem Gehäuse verbunden ist und der Rotor einen Rotorträger aufweist, der dazu ausgelegt ist, radial außen Rotorblechpakete oder Rotorpermanentmagnete zu tragen und radial innen einen zylinderförmigen Rotorinnenraum definiert. Weiterhin ist der Rotor mit Hilfe einer Rotorlagerungsanordnung relativ zu dem Stator positionierbar, wobei die Rotorlagerungsanordnung einen stationären Achszapfen aufweist, der dazu ausgelegt ist, einen Rotor räumlich in einem Stator anzuordnen und in einem vorbestimmten Abstand zum Stator zu halten. Weiterhin umfasst die Rotorlagerungsanordnung eine Lageranordnung, die dazu ausgelegt ist, den Rotor drehbar auf und um den Achszapfen zu lagern, wobei die Lageranordnung einen drehfest mit dem Rotor verbindbaren Lagerträger mit einem hohlzylindrischen Lagerträgerabschnitt aufweist. Dieser Lagerträgerabschnitt definiert einen Lagerträgerinnenraum, in den sich der Achszapfen erstreckt.

Um eine möglichst einfache Montage bzw. Demontage der Rotorlagerungsanordnung in/aus dem Generator zu ermöglichen, ist der hohlzylindrische Lagerträgerabschnitt derart bemaßt, dass er in einen von dem Rotor definierten Rotorinnenraum einbringbar ist und lösbar mit dem Rotor verbindbar ist, sodass der Achszapfen und die Lageranordnung als Montageeinheit ausgebildet sind, die in ihrer Gesamtheit in den Rotorinnenraum einsetzbar und aus dem Rotorinnenraum demontierbar ist. Zudem weist das Generatorgehäuse weiterhin einen sich radial nach innen erstreckenden Gehäuseabschnitt aufweist, der im Betriebszustand mit dem Achszapfen der Rotorlagerungsanordnung verbunden ist, wobei der Generator weiterhin mindestens eine Arretiervorrichtung aufweist, die dazu ausgelegt ist, mit einer Arretiervorrichtung am Rotor zusammenzuwirken, so dass im Montagezustand der Rotor in dem Stator in seiner vorgegebenen Position arretierbar ist.

Dadurch kann die Rotorlagerungsanordnung als gesamte Einheit aus dem Generator entfernt werden, wobei es möglich ist, das Gehäuse bzw. den Generator an seiner Position, insbesondere seiner Unterwasserposition, zu lassen und lediglich die Rotorlagerungsanordnung auszubauen und für eine Wartung an Land bzw. auf den Boden zu transportieren. Mittels der Arretiervorrichtung kann zudem sichergestellt werden, dass beim Entfernen der Rotorlagerungsanordnung der Rotor nicht unkontrolliert aufgrund der Magnetkräfte mit dem Stator kollidiert, was zur Folge haben würde, dass der gesamte Generator auseinandergebaut und neu zusammengesetzt werden muss.

Gemäß einem vorteilhaften Ausführungsbeispiel weist die Lageranordnung mindestens eine Lagereinheit auf, die zumindest einen Innenring und einen Außenring umfasst, und die zwischen Achszapfen und Lagerträger angeordnet ist. Dabei ist der Achszapfen derart angeordnet, dass der mindestens eine Innenring drehfest mit dem Achszapfen und der mindestens eine Außenring drehfest mit dem Lagerträger verbunden ist. Dadurch wird ermöglicht, dass der Lagerträger, die mindestens eine Lagereinheit und der Achszapfen als gemeinsame Einheit ausgebildet sind, die zusammen montier- und demontierbar sind. Die Lagereinheiten selbst müssen deshalb bei der Demontage bzw. Montage der Rotorlagerungsanordnung weder von dem Lagerträger noch von dem Achszapfen entfernt werden, um die gesamte Anordnung aus bzw. in den Generator auszubringen bzw. einzubringen.

Die Lagereinheiten selbst können Wälzlager oder Gleitlager sein. Dabei ist insbesondere bevorzugt, dass die Lagereinheiten als Wälzlager, insbesondere Kegelrollenlager ausgestaltet sind, die dazu ausgelegt sind, hohe Lasten zu tragen und Kippmomenten standzuhalten.

Insbesondere ist eine Ausführungsform bevorzugt, bei der zwei Lagereinheiten vorgesehen sind, die voneinander beabstandet angeordnet sind und auf dem Achszapfen angeordnet sind. Gemäß einem weiteren bevorzugten Ausführungsbeispiel sind dabei die beiden beabstandeten Lagereinheiten dermaßen bezüglich des Rotors angeordnet sind, dass beide radial innerhalb und axial überdeckend in dem Rotorinnenraum, insbesondere innerhalb eines Rotorträgers, angeordnet sind. Dabei sind sie vorzugweise mittig des Rotors und insbesondere mittig zu einer Rotormittelachse axial gleich beabstandet. Vorzugsweise sind die Lagereinheiten Kegelrollenlager in O-Anordnung. Dies ermöglicht eine besonders stabile, kippsichere und positionsgenaue Lagerung des Rotors zu dem Stator.

Neben der Ausgestaltung, dass die Lagereinheiten einen Innen- oder Außenring aufweisen, ist selbstverständlich auch möglich, dass der Lagerträger bzw. der Achszapfen selbst als Innen- bzw. Außenringelement ausgestaltet sind. Dabei kann der Lagerträger und/oder der Achszapfen insbesondere Laufbahnen aufweisen, auf denen Wälzkörper abrollen.

Da es sich bei den Lagern jedoch um Verschleißteile handelt, ist es bevorzugt, den Lagerträger und Achszapfen als separate Elemente auszugestalten und die Lagereinheiten bzw. den entsprechenden Innen-/Außenring an dem Lagerträger bzw. Achszapfen zu befestigen.

Gemäß einem weiteren vorteilhaften Ausführungsbeispiel weist der Achszapfen weiterhin einen sich radial erstreckenden Flansch auf, der dazu ausgelegt ist, mit einem stationären Gehäuse, das den Generator umgibt, verbindbar zu sein. Dies ermöglicht, dass der Generatorinnenraum vor einer Außenumgebung abgeschlossen ist. Dabei kann allerdings vorgesehen sein, dass das umgebende Fluid, insbesondere das Wasser, über die Verbindung zwischen Flansch und Gehäuse in den Generatorinnenraum eindringen kann, um als Kühlmittel für den Generator zu fungieren.

Dabei ist insbesondere bevorzugt, dass der Flansch und/oder das Gehäuse mindestens eine, vorzugsweise mehrere umfänglich verteilte, Durchgangsöffnung(en) aufweist. Diese Durchgangsöffnungen ermöglichen einen Zugang, insbesondere einen Montagezugang zu einem Generatorinnenraum. So kann beispielsweise durch die Durchgangsöffnungen ein Werkzeug an ein Befestigungsmittel, mit dem die Lageranordnung an dem Rotor befestigt ist, geführt werde, um die Verbindung zwischen Lagerträger und Rotor zu lösen. Dadurch kann auch im Generatorinnenraum gearbeitet werden, ohne den gesamten Generator auseinanderzubauen.

Gemäß einem weiteren vorteilhaften Ausführungsbeispiel weist der Lagerträger mindestens einen sich radial erstreckenden Flanschabschnitt auf, der mehrere umfänglich verteilte, sich axial erstreckende Befestigungsmittelaufnahmen aufweist, sodass der Lagerträger mittels sich axial erstreckender Befestigungsmittel an den Rotor befestigbar ist. Der Lagerträgerflansch ermöglicht somit eine Befestigung des Lagerträgers an einer Stirnseite des Rotors, die axial zugänglich ist, so dass die Zugänglichkeit nicht von dem radial außen angeordneten Stator behindert oder eingeschränkt ist.

Bei einer derartigen axialen Zugänglichkeit ist zudem besonders bevorzugt, dass auch die in dem Flansch und/oder in dem Gehäuse vorgesehenen Durchgangsöffnungen sich axial erstrecken, und bevorzugt auf die mehreren umfänglich verteilten Befestigungsmittelaufnahmen des Lagerträgers ausgerichtet sind. Dann sind die axial verlaufenden oder ausgerichteten Befestigungsmittel über entsprechend ausgerichtete Durchgangsöffnungen in dem Gehäuse oder dem Flansch des Achszapfens zugänglich, sodass für eine Demontage der Rotorlagerungsanordnung lediglich die Befestigung zwischen Achszapfenflansch und Gehäuse und zwischen Rotor und Lagerträger gelöst werden muss, um die gesamte Rotorlagerungsanordnung aus dem Generatorinnenraum zu entfernen bzw. in analoger Weise im Generatorinnenraum zu befestigen.

Vorzugsweise können die derart ausgestalteten Durchgangsöffnungen mittels eines Deckels abdeckbar sein. Der Deckel kann wasserdicht ausgebildet sein. Alternativ kann das Deckelelement auch nicht vollständig gegen einen Wassereintritt abdichten, insbesondere, wenn der Generator mit Hilfe des umgebenden Wassers gekühlt wird. In diesem Fall verhindert der Deckel lediglich, dass Verunreinigungen in den Generatorinnenraum eintreten, Wasser jedoch nicht vollständig an einem Eintritt gehindert wird.

Gemäß einem weiteren bevorzugten Ausführungsbeispiel weist die Rotorlagerungsanordnung weiterhin mindestens eine Dichtungsanordnung auf, die dazu ausgelegt ist, den Lagerträgerinnenraum gegen ein Eindringen von Wasser abzudichten. Auch wenn Wasser bei Unterwassergeneratoren als Kühlmittel in dem Generatorinnenraum bevorzugt ist, ist ein Eintritt von Wasser in die Lagereinheit bzw. in den Lagerträgerinnenraum selbst zu vermeiden, da dies die Lagereinheiten beschädigt und zu einer verringerten Lebensdauer führen kann. Grund dafür ist die verstärkte Korrosion einer Lagereinheit, die Wasser ausgesetzt ist. Dabei ist die Dichtungsanordnung an zumindest einer axialen Seite der Lageranordnung, vorzugsweise an der mit dem Flansch ausgestatteten Seite angeordnet. An dieser Seite tritt der Achszapfen in den Lagerträgerinnenraum und öffnet somit den Lagerträgerinnenraum zu einer Außenumgebung, so dass hier ein Wassereintritt möglich ist.

Da Wasser aber auch über die Verbindung zwischen dem Lagerträger und dem Rotor in den Lagerinnenraum diffundieren kann, ist weiterhin vorteilhaft, wenn ein sich radial erstreckendes Deckelelement vorgesehen ist, das an dem hohlzylindrischen Lagerträgerabschnitt befestigt ist und den Lagerträgerinnenraum dichtend abschließt, wobei vorzugsweise das Deckelelement an der der Dichtungsanordnung abgewandten Seite angeordnet ist. Dadurch kann sichergestellt werden, dass Wasser, das zwischen dem Lagerträger und dem Rotor in den Rotorinnenraum diffundiert, nicht in den Lagerträgerinnenraum eindringen kann.

Selbstverständlich ist ebenfalls möglich das Deckelelement einstückig mit dem Lagerträger auszubilden. Der Lagerträger weist dann eine Topfform auf, wobei das sich radial erstreckende Deckelelement den Topfboden bildet. Dadurch kann eine besonders sichere Abdichtung der Lageranordnung erreicht werden.

Mit Hilfe der Dichtungsanordnung und des Deckelelements wird die Lageranordnung als sogenannte Kassettenlageranordnung ausgebildet, bei der die Lagereinheiten in einem vollständig abgeschlossenen Lagerträgerinnenraum angeordnet sind. Der Lagerträgerinnenraum wird somit radial durch den Lagerträger und den Achszapfen und axial durch das Deckelelement und die Dichtung vollständig von einer Umgebung abgeschottet. Die gesamte Einheit kann aus dem Generatorinnenraum entnommen bzw. in den Generatorinnenraum eingebracht werden, ohne dass Waser in den empfindlichen Lagerträgerinnenraum eindringen kann.

Gemäß einem weiteren bevorzugten Ausführungsbeispiel kann die Dichtungsanordnung einen Dichtlippenträger, der mehrere Dichtlippen trägt und eine optionale Anlaufhülse aufweisen, auf der die mehreren Dichtlippen anlaufen. Die Anlaufhülse kann auch beispielsweise über den Achszapfen ausgebildet sein. Eine derartige Dichtungsanordnung hat sich als besonders resistent gegen eintretendes Wasser herausgestellt, da die mehreren Dichtlippen zuverlässig Wasser an einem Eintritt in den empfindlichen Lagerinnenraum hindern können. Darüber hinaus können die Dichtlippenelemente und die Anlaufhülse bei Verschleiß leicht ausgetauscht werden.

Eine derartige Dichtanordnung kann rotierende Dichtlippen, die an einem rotierenden Dichtungsträger befestigt sind und an einer stationären Anlaufhülse anlaufen, oder stationäre Dichtlippen, die an einem stationären Dichtungsträger befestigt sind und an einer rotierenden Anlaufhülse anlaufen, aufweisen. Dabei kann, wie ein besonders bevorzugtes Ausführungsbeispiel zeigt, der Dichtlippenträger an dem Achszapfen befestigt sein und die Anlaufhülse an dem Lagerträger, oder der Dichtlippenträger ist an dem Lagerträger befestigt und die Anlaufhülse an dem Achszapfen. Wie oben erwähnt kann die Anlaufhülse und/oder der Dichtlippenträger auch einstückig mit Achszapfen und/oder Lagerträger ausgebildet sein.

Selbstverständlich sind auch andere Dichtungsanordnungen möglich, bei denen auch eine Kombination aus rotierenden und stationären Dichtlippen eingesetzt werden kann. Wichtig für die Dichtanordnung ist lediglich, dass sie einen möglichst vollständigen Eintritt von Wasser in den empfindlichen Lagerinnenraum verhindern kann.

Weiterhin ermöglicht der beschriebene Generator eine stabile und positionsgenaue Anordnung des Rotors in den Stator und gleichzeitig eine einfache Wartung der Rotorlagerungsanordnung, falls Dichtung und/oder Lagereinheiten erneuert werden müssen. Ebenfalls kann ein derartiger Generator im Wesentlichen an seiner Position in einer Gondel an einem Windkraftturm oder unter Wasser verbleiben, auch wenn Wartungsarbeiten an der Rotorlagerungsanordnung ausgeführt werden müssen.

Soll die Rotorlagerungsanordnung aus dem Generator entfernt werden, ist wie oben erwähnt vorgesehen, dass das Generatorgehäuse einen sich radial nach innen erstreckenden Gehäuseabschnitt aufweist, der im Betriebszustand mit dem Achszapfens, vorzugsweise mit dem optional ausgebildeten Flansch des Achszapfens der Rotorlagerungsanordnung verbunden ist, und weiterhin mindestens eine Arretiervorrichtung aufweist, die dazu ausgelegt ist, mit einer Arretiervorrichtung am Rotor zusammenzuwirken, sodass im Montagezustand der Rotor in dem Stator in seiner vorgegebenen Position arretierbar ist. Mittels dieser Arretiervorrichtung kann sichergestellt werden, dass auch bei Entfernen der Rotorlagerungsanordnung der Rotor nicht unkontrolliert aufgrund der Magnetkräfte mit dem Stator kollidiert, was zur Folge haben würde, dass der gesamte Generator auseinandergebaut und neu zusammengesetzt werden muss.

Die Arretiervorrichtung kann bspw. über eine simple Schraubbefestigung realisiert werden, bei der eine Schraube in eine am Rotor vorgesehene Schraubaufnahme einschraubbar ist, wobei sich die Schraube durch eine Durchgangsöffnung im Gehäuseabschnitt des Generators erstrecken kann. Selbstverständlich können auch mehrere Arretiervorrichtungen vorhanden sein oder die Arretiervorrichtung beispielsweise mehrere Schraubverbindungen aufweisen.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine schematische Schnittansicht eines als Unterwassergenerator ausgebildeten Generators für eine Strömungskraftanlage gemäß einem ersten bevorzugten Ausführungsbeispiel; und
- Fig. 2:: eine schematische Schnittansicht eines als Unterwassergenerator ausgebildeten Generators für eine Strömungskraftanlage gemäß einem zweiten bevorzugten Ausführungsbeispiel.

Im Folgenden werden gleiche oder funktionell gleichwirkende Elemente mit denselben Bezugszeichen gekennzeichnet.

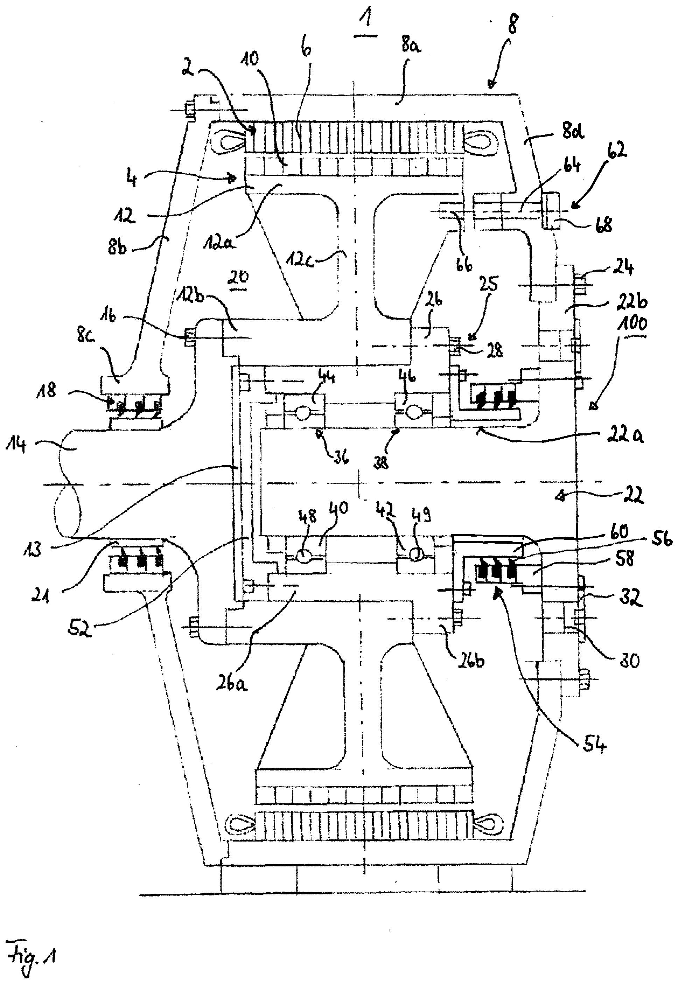

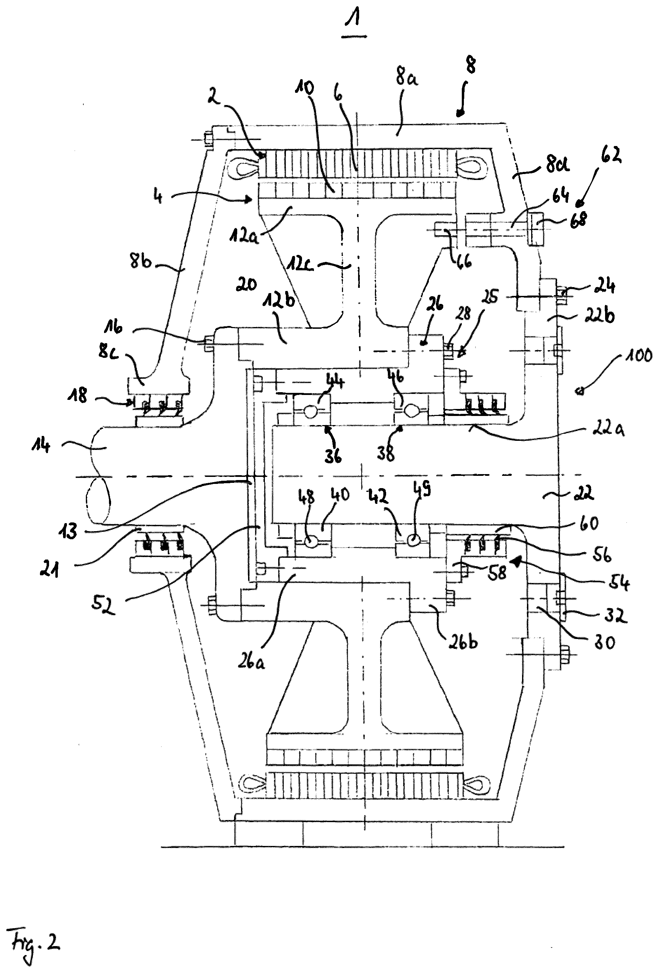

Die Figuren 1 und 2 zeigen schematisch eine Schnittansicht durch einen Generator, insbesondere durch einen Unterwassergenerator, 1 mit einem Stator 2 und einem Rotor 4. Der Stator 2 weist Blechpakete 6 auf und wird von einem Gehäuse 8 getragen. Das Gehäuse 8 ist stationär und kann, wie in Figur 1 und 2 dargestellt, aus mehreren Teilen 8a, 8b zusammengesetzt sein.

Der Rotor 4 ist als Innenläuferrotor ausgebildet und radial innerhalb des Stators 2 angeordnet. Er weist Permanentmagnete10 auf, die von einem Rotorträger 12 getragen werden, wobei die Permanentmagnete insbesondere auf den Rotorträger 12 geschraubt oder geklebt werden. Die Permanentmagnete sind vorzugsweise aus Neodyn gefertigt und weisen eine besonders hohe Magnetkraft auf. Statt der bevorzugten Permanentmagnete kann der Rotor aber auch Blechpakete aufweisen, die von dem Rotorträger 12 getragen werden. Der Rotorträger 12 hat in den dargestellten Ausführungsbeispielen einen radial äußeren und einen radial inneren, sich axial erstreckenden Abschnitt 12a, 12b, die mit einem sich radial erstreckenden scheibenförmigen Element 12c verbunden sind. Die Rotorblechpakete 10 werden dabei von dem radial äußeren sich axial erstreckenden Rotorträgerabschnitt 12a getragen. Der radial innere, sich axial erstreckende Rotorträgerabschnitt 12b bildet einen Rotorinnenraum 13 und ist weiterhin derart ausgebildet, dass er mit einer Rotoreingangswelle 14 drehfest über bspw. Befestigungsmittel 16 verbunden ist, sodass der gesamte Rotor 4 in Rotation versetzbar ist. Die Rotoreingangswelle 14 ist beispielsweise mit den von einer Strömung angetriebenen Rotorblättern (nicht dargestellt) drehfest verbunden. Im Falle von anderen Strömungskraftwerken, wie beispielsweise eine Windkraftanlage, kann die Rotoreingangswelle 14 auch mit einem Getriebe verbunden sein.

Wie weiterhin den Figuren 1 und 2 zu entnehmen, erstreckt sich der Gehäuseabschnitt 8b nach radial innen in Richtung der Rotoreingangswelle 14 und trägt an seinem radial inneren Ende 8c eine Dichtungsanordnung 18, die mit der Rotoreingangswelle 14 zusammenwirkt, um Verunreinigungen der Außenumgebung daran zu hindern, in einen Generatorinnenraum 20, der von dem Gehäuse 8 definiert ist, einzudringen. In den in den Figuren dargestellten Ausführungsbeispielen ist die Dichtungsanordnung 18 aus mehreren Dichtlippen ausgestaltet, die stationär an einer auf der Rotoreingangswelle 14 rotierend ausgebildeten Anlaufhülse 21 anlaufen. Selbstverständlich ist ebenfalls möglich, die Dichtlippen an der Rotoreingangswelle 14 zu befestigen und an dem Gehäuseabschnitt 8c anlaufen zu lassen.

Der Rotor 4 selbst wird über eine Rotorlagerungsanordnung 100 in seiner Position zum Stator 2 gesichert. Dabei umfasst die Rotorlagerungsanordnung 100 einen Achszapfen 22, der stationär ausgebildet ist und einen sich zylindrisch erstreckenden Abschnitt 22a und einen sich radial erstreckenden Flanschabschnitt 22b aufweist. Der sich radial erstreckende Flanschabschnitt 22b des stationären Achszapfens 22 ist wiederum über Befestigungselemente 24 mit dem Gehäuse 8 verbunden, so dass der Generatorraum 20 abgeschlossen ist. In den dargestellten Ausführungsbeispielen weist dazu das Gehäuse 8 einen weiteren, sich nach radial innen erstreckenden Gehäuseabschnitt 8d auf, der an seinem radial inneren Ende mit dem Flanschabschnitt 22b des Achszapfens 22 zusammenwirkt.

Die Rotorlagerungsanordnung 100 weist weiterhin eine Lageranordnung 25 mit einem Lagerträger 26 auf, der derart bemaßt ist, dass er in den Rotorinnenraum 13 einbringbar ist. Der Lagerträger 26 umfasst dabei einen hohlzylindrischen Lagerträgerabschnitt 26a und einen sich axial erstreckenden Flanschabschnitt 26b auf. Dabei kontaktiert die zylindrische Außenfläche des Lagerträgerabschnitts 26a die zylindrische Innenfläche des Rotorträgerabschnitts 12b. Weiterhin ist dargestellt, dass der sich axial erstreckende Flanschabschnitt 26b des Lagerträger entlang einer Stirnseite des Rotorträgers 12 erstreckt und mittels Befestigungsmitteln 28 an dem Rotorträger 12 befestigt ist, sodass der Lagerträger 26 rotierend ausgestaltet ist. Dabei ist insbesondere bevorzugt, dass die Befestigungsmittel 28 sich axial erstrecken, sodass sie von axial außen zugänglich sind, um die Verbindung zwischen dem Lagerträger 26 und dem Rotorträger 12b zu lösen.

Um eine derartige Zugänglichkeit zu den Befestigungsmitteln 28 zu gewährleisten, weist weiterhin der Achszapfenflansch 22b Durchgangsöffnungen 30 auf, durch die ein Werkzeug in den Generatorinnenraum einbringbar ist, um die Befestigungsmittel 28 zu lösen oder festzuziehen. Je nach Ausgestaltung kann eine derartige Durchgangsöffnung auch in dem sich radial erstreckenden Gehäuseabschnitt 8d ausgebildet sein. Ist statt einer axialen Zugänglichkeit der Befestigungsmittel eine radiale Zugänglichkeit gewählt ist/sind die Durchgangsöffnung(en) vorzugsweise in dem sich axial erstreckenden Gehäuseabschnitt 8a angeordnet.

Im Betrieb können die Durchgangsöffnungen 30 mittels Deckelelementen 32 verschlossen werden.

Zwischen Lagerträger 26 und Achszapfen 22 sind weiterhin indem dargestellten Ausführungsbeispiel zwei Lagereinheiten 34, 36 vorgesehen, die die rotierenden Bauteile bestehend aus Rotor 4 und Lagerträger 26 gegenüber dem stationären Achszapfen 22 drehbar lagern. Die Lagereinheiten 36, 38 können, wie dargestellt, Wälzlager sein, es ist jedoch auch möglich, dass die Lagereinheiten Gleitlager sind.

Bevorzugt sind, wie in den Figuren dargestellt, die beiden beabstandeten Lagereinheiten 34, 36 dermaßen bezüglich des Rotors 4 angeordnet sind, dass beide radial innerhalb und axial überdeckend mit dem Rototorträger12a angeordnet sind und je links und rechts von der axialen Mitte des Rotorträgers, beispielsweise dem scheibenförmigen Verbindungselement 12c, axial angeordnet sind. Vorzugsweise sind die Lagereinheit 34, 36 Kegelrollenlager in O-Anordnung.

In dem dargestellten Ausführungsbeispiel umfasst jede Lagereinheit 36, 38 einen Innenring 40, 42, die drehfest mit dem Achszapfen 22 verbunden sind, und Außenringe 44, 46, die drehfest mit dem Lagerträger 26 verbunden sind. Zwischen den Innenringen und Außenringen sind in dem dargestellten Ausführungsbeispiel Wälzkörper 48, 49 vorhanden, die auf den Innen- 40, 42 bzw. Außenringen 44, 46 abrollen. Da der Lagerträger 26 über das Befestigungsmittel 28, und der Achszapfen 22 über das Befestigungsmittel 24 vollständig von dem Rotor 4 und dem Gehäuse 8 lösbar sind, kann die Rotorlagerungsanordnung 100 in ihrer Gesamtheit aus dem Generatorinnenraum 20 entfernt werden.

Wie oben erwähnt, kann im Fall von Unterwassergeneratoren, der Generatorinnenraum 20 mit Wasser, das als Kühlmittel für den Generator fungiert, geflutet werden. Da dieses Wasser allerdings für die Lager 36, 38 schädlich ist und auch beim Ausbau oder Einbau, bei einer Wartung und/oder allgemein beim Lösen der Befestigungsmittel 24 bzw. 28 in den Generatorinnenraum 20 eintreten kann und die Lager 36, 38 beschädigen, ist weiterhin vorgesehen, dass ein Lagerträgerinnenraum 50, der von dem hohlzylindrischen Abschnitt 26a des Lagerträgers gebildet ist, vollständig zu einer Außenumgebung, insbesondere dem Generatorinnenraum 20, abgeschlossen ist. Dazu weist der Lagerträger 26 an seinem der Rotoreingangswelle 14 zugewandten Ende ein Deckelelement 52 auf, das dichtend an dem Lagerträger 26 befestigt ist. Alternativ kann das Deckelelement 52 einstückig mit dem Lagerträger 26 ausgebildet sein.

Auf der der Rotoreingangswelle 14 abgewandten Seite dagegen ist eine Dichtvorrichtung 54 vorgesehen, die mit dem Achszapfen 22 bzw. dem Lagerträger 26 zusammenwirkt, sodass auch hier der Lagerinnenraum 50 vollständig von der Außenumgebung abgedichtet ist.

Dadurch wird eine kassettenförmige Rotorlagerungsanordnung 100 bereitgestellt, die auch unter Wasser aus dem Generator 1 entfernt bzw. in diesen eingesetzt werden kann, ohne dass man Gefahr läuft, den empfindlichen Lagerinnenraum 50 aufgrund von Wassereintritt einem hohen Korrosionsrisiko auszusetzen.

Die Dichtungsanordnung 54 selbst umfasst, wie in Fig. 1 und 2 dargestellt, mehrere Dichtlippen 56, die an einem Dichtlippenträger 58 angebracht sind und gegen eine Anlaufhülse 60 anlaufen. Dabei kann der Dichtlippenträger 58 drehfest mit dem Achszapfen 22, insbesondere dem Flanschbereich 22b des Achszapfens 22 verbunden sein, wie in Figur 1 dargestellt, es ist jedoch auch möglich, den Dichtlippenträger 58 drehfest mit dem Lagerträger 26 auszugestalten, wie in Figur 2 dargestellt.

In dem in Figur 1 dargestellten Ausführungsbeispiel ist somit eine stationäre Dichtlippenanordnung 56 vorgestellt, die gegen eine rotierende Anlaufhülse 60 anläuft, wobei die Anlaufhülse 60 in diesem Fall drehfest mit dem Lagerträger 26 verbunden ist, während in dem in Figur 2 dargestellten Fall eine rotierende Dichtlippenanordnung 56 vorgestellt ist, die gegen eine stationäre Anlaufhülse 60, die in diesem Fall drehfest mit dem Achszapfen 22 verbunden ist, anläuft.

Selbstverständlich sind auch andere Ausgestaltungen der Dichtungsanordnung möglich, es sollte jedoch sichergestellt werden, dass über die Dichtungsanordnung 54 kein Wasser in den empfindlichen Lagerinnenraum 50 eindringen kann. Da sowohl Dichtungslippenträger 58 als auch Anlaufhülse 60 in ihrer Gesamtheit an dem Achszapfen 22 bzw. am Lagerträger 26 angebracht sind, ist auch die ganze Dichtungsanordnung 54 Teil der Rotorlagerungsanordnung 100 und kann zusammen mit der Lageranordnung und dem Achszapfen aus dem Generatorinnenraum 20 entfernt werden. Dadurch kann eine vollständig abgedichtete Rotorlagerungsanordnung 100 bereitgestellt werden, die in ihrer Gesamtheit in den Generator ein- bzw. aus dem Generator ausbaubar ist.

Um eine derartige Demontage zu ermöglichen, ist weiterhin vorgesehen, dass die Positionierung zwischen Stator 2 und Rotor 4 mittels einer Arretiervorrichtung 62 fixiert werden kann, auch wenn die Rotorlagerungsanordnung 60 aus dem Generator entfernt wird. In dem dargestellten Ausführungsbeispiel der Figuren 1 und 2 ist die Arretiervorrichtung 62 über eine Durchgangsöffnung 64 in dem stationären Gehäuse 8d ausgebildet, die sich axial erstreckt. Diese Durchgangsöffnung 64 ist auf eine entsprechende Aufnahme 66 in dem Rotorträger 12 ausgerichtet. Soll eine Arretierung stattfinden, kann durch die Öffnung 64 ein Arretierelement bspw. ein Schraubelement 68 eingebracht werden, das sich zum Arretieren in die Aufnahme 66 erstreckt und somit den Rotor 4 in seiner Position zum Stator 2 bzw. allgemein in seiner Position im Generatorinnenraum 20 sichert. Ein radiales, axiales oder umfängliches Verschieben des Rotors 4 ist bei eingebrachtem Befestigungsmittel 68 in der Arretiervorrichtung 62 nicht mehr möglich. Dies wiederum erlaubt, die gesamte Rotorlageranordnung 100 aus dem Generatorinnenraum zu entfernen, ohne dass eine den Generator beschädigende Verlagerung des Rotors im Generator stattfinden könnte. Insbesondere die starken von dem Rotor getragenen Permanentmagneten, z.B. aus Neodyn, entwickeln eine enorme Zugkraft, so dass ein Ausbau des Rotors 4 normalerweise nur mit extremem Aufwand möglich ist. Sollten nämlich die Magnete 10 den Stator 2 dabei berühren, so ist eine Trennung aufgrund der Zugkraft nahezu unmöglich.

Insgesamt kann mit der vorgestellten Rotorlagerungsanordnung eine einfach zu montierende und demontierende Einheit bereitgestellt werden, die einfach in einen Generator, insbesondere einen Unterwassergenerator ein- und ausbaubar ist, ohne dass besondere Vorkehrungen hinsichtlich der Wasserdichtheit getroffen werden müssen, um die wasserempfindlichen Lagereinheiten zu schützen. So ist bspw. auch möglich, die Rotorlagerungsanordnung direkt an der Einbauposition, wie beispielsweise der Unterwasserposition, des Generators zu tauschen oder allgemein die Rotorlagerungsanordnung ohne aufwendiges Trocknungsverfahren aus dem Generator auszubauen. Aufgrund der Abgeschlossenheit der Rotorlagerungsanordnung kann sichergestellt werden, dass die gesamte Lagereinheit vor einem schädlichen Korrosionseinfluss von Wasser geschützt ist.

### Bezugszeichenliste

- 1: Generator
- 100: Rotorlagerungsanordnung
- 2: Stator
- 4: Rotor
- 6: Statorblechpaket
- 8: Gehäuse
- 10: Permanentmagnete
- 12: Rotorträger
- 13: Rotorinnenraum
- 14: Rotoreingangswelle
- 16: Befestigungsmittel
- 18: Dichtungsanordnung
- 20: Generatorinnenraum
- 22: Achszapfen
- 24: Befestigungsmittel
- 25: Lageranordnung
- 26: Lagerträger
- 28: Befestigungsmittel
- 30: Durchgangsöffnung
- 32: Deckelelement
- 36, 38: Lagereinheit
- 40, 42: Innenring
- 44, 48: Außenring
- 48, 49: Wälzkörper
- 50: Lagerinnenraum
- 52: Deckelelement
- 54: Dichtungsanordnung
- 56: Dichtlippenanordnung
- 58: Dichtlippenträger
- 60: Anlaufhülse
- 62: Arretiervorrichtung
- 64: Durchgangsöffnung
- 66: Aufnahmeöffnung
- 68: Arretierelement

## Patentansprüche

1. Generator (1) für ein Strömungskraftwerk mit einem Stator (2) und einem Innenläuferrotor (4), die in einem Gehäuse (8) angeordnet sind, wobei der Stator (2) drehfest mit dem Gehäuse (8) verbunden ist und der Rotor (4) einen Rotorträger (12) aufweist, der dazu ausgelegt ist radial außen Rotorblechpakete oder Rotorpermanentmagnete (10) zu tragen und radial innen einen zylinderförmigen Rotorinnenraum (13) definiert, wobei weiterhin der Rotor (4) mit Hilfe einer Rotorlagerungsanordnung (100) relativ zu dem Stator (2) positionierbar ist, wobei die Rotorlagerungsanordnung (100) einen stationären Achszapfen (22) aufweist, der dazu ausgelegt ist, den Rotor (4) räumlich in dem Stator (2) anzuordnen und in einem vorbestimmten Abstand zum Stator (2) zu halten, und einer Lageranordnung (25), die dazu ausgelegt ist, den Rotor (4) drehbar auf und um den Achszapfen (22) zu lagern, wobei die Lageranordnung (25) einen drehfest mit dem Rotor (4) verbindbaren Lagerträger (26) mit einem hohlzylindrischen Lagerträgerabschnitt (26a) aufweist, der einen Lagerträgerinnenraum (50) definiert, und sich der Achszapfen (22) in den Lagerträgerinnenraum (50) erstreckt, wobei der hohlzylindrische Lagerträgerabschnitt (26a) derart bemaßt ist, dass er in einem von dem Rotor (4) definierten Rotorinnenraum (13) einbringbar ist und lösbar mit dem Rotor (4) verbindbar ist, so dass der Achszapfen (22) und die Lageranordnung (25) als Montageeinheit ausgebildet sind, die in ihrer Gesamtheit in den Rotorinnenraum (13) einsetzbar und aus dem Rotorinnenraum (13) demontierbar ist, und das Generatorgehäuse (8) weiterhin einen sich radial nach innen erstreckenden Gehäuseabschnitt (8d) aufweist, der im Betriebszustand mit dem Achszapfen (22) der Rotorlagerungsanordnung (100) verbunden ist, und der Generator (1) weiterhin mindestens eine Arretiervorrichtung (62) aufweist, die dazu ausgelegt ist, mit einer Arretiervorrichtung (66) am Rotor (4) zusammenzuwirken, so dass im Montagezustand der Rotor (4) in dem Stator (2) in seiner vorgegebenen Position arretierbar ist.

2. Generator (1) nach Anspruch 1, wobei die Lageranordnung (25) weiterhin mindestens eine Lagereinheit (36; 38) mit einem Innenring (40; 42) und einem Außenring (44; 46) aufweist, die zwischen Achszapfen (22) und Lagerträger (26) angeordnet ist, und wobei der Achszapfen (22) derart angeordnet ist, dass der mindestens eine Innenring (40; 42) drehfest mit dem Achszapfen (22) und der mindestens eine Außenring (44; 46) drehfest mit dem Lagerträger (26) verbunden ist.

3. Generator (1) nach Anspruch 1 oder 2, wobei der Achszapfen (22) weiterhin einen sich radial erstreckenden Flansch (22b) aufweist, der dazu ausgelegt ist, mit dem stationären Gehäuse (8), das den Generator (1) umgibt, verbindbar zu sein.

4. Generator (1) nach Anspruch 3, wobei das Gehäuse (8) und/oder der Flansch (22b) mindestens eine Durchgangsöffnung (30) aufweist, wobei vorzugsweise mehrere umfänglich verteilte Durchgangsöffnungen vorgesehen sind.

5. Generator (1) nach einem der vorhergehenden Ansprüche, wobei der Lagerträger (26) weiterhin und einen sich radial erstreckenden Flanschabschnitt (26b) aufweist, der vorzugsweise mehrere umfänglich verteilte, sich axial erstreckende Befestigungsmittelaufnahmen (28) aufweist, so dass der Lagerträger (26) mittels sich axial erstreckender Befestigungsmittel an dem Rotor (4) befestigbar ist.

6. Generator (1) nach Anspruch 4 und 5, wobei die mindestens eine Durchgangsöffnung (30) als sich axial erstreckende Durchgangsöffnung ausgebildet ist, die koaxial zu den sich axial erstreckenden Befestigungsmittelaufnahmen (28) des Lagerträger (26) angeordnet ist.

7. Generator (1) nach einem der vorhergehenden Ansprüche, wobei an zumindest einer axialen Seite, vorzugsweise an der mit dem Lagerflansch (26b) ausgestatteten Seite, der Lageranordnung (25) weiterhin mindestens eine Dichtungsanordnung (54) vorgesehen ist, die dazu ausgelegt ist, den Lagerträgerinnenraum (50) gegen ein Eindringen von Wasser abzudichten.

8. Generator (1) nach einem der vorhergehenden Ansprüche, wobei weiterhin ein sich radial erstreckendes Deckelelement (52) vorgesehen ist, das an dem hohlzylindrische Lagerträgerabschnitt (26a) befestigt ist und den Lagerträgerinnenraum (50) abschließt, wobei vorzugsweise das Deckelelement (52) an der der Dichtungsanordnung (54) abgewandten Seite angeordnet ist.

9. Generator (1) nach einem der Ansprüche 6 bis 8, wobei die Dichtungsanordnung (54) einen Dichtlippenträger (58) aufweist, der mehrere Dichtlippen (56) trägt und eine Anlaufhülse (60) aufweist, auf der die mehreren Dichtlippen (56) anlaufen.

10. Generator (1) nach Anspruch 9, wobei der Dichtlippenträger (58) an dem Achszapfen (22) befestigt ist und die Anlaufhülse (60) an dem Lagerträger (26) befestigt ist, oder der Dichtlippenträger (58) an dem Lagerträger (26) befestigt ist und die Anlaufhülse (60) an dem Achszapfen (22) befestigt ist.

## Claims

1. Generator (1) for a continuous-flow power plant having a stator (2) and an internal rotor (4), which are arranged in a housing (8), wherein the stator (2) is connected to the housing (8) so as to rotate with it and the rotor (4) has a rotor support (12), which is designed to support rotor laminated cores or rotor permanent magnets (10) radially on the outside and defines a cylindrical rotor interior (13) radially on the inside, wherein the rotor (4) can further be positioned relative to the stator (2) with the aid of a rotor bearing arrangement (100), wherein the rotor bearing arrangement (100) has a stationary spindle (22), which is designed to arrange the rotor (4) spatially in the stator (2) and keep it at a predetermined distance from the stator (2), and a bearing arrangement (25), which is designed to support the rotor (4) rotatably on and around the spindle (22), wherein the bearing arrangement (25) has a bearing support (26), which can be connected to the rotor (4) so as to rotate with it and has a hollow-cylindrical bearing support section (26a) which defines a bearing support interior (50), and the spindle (22) extends into the bearing support interior (50), wherein the hollow-cylindrical bearing support section (26a) is dimensioned in such a way that it can be inserted into a rotor interior (13) defined by the rotor (4) and can be detachably connected to the rotor (4), so that the spindle (22) and the bearing arrangement (25) are formed as an assembly unit which can be inserted in its entirety into the rotor interior (13) and can be removed from the rotor interior (13), and the generator housing (8) further has a radially inwardly extending housing section (8d), which is connected to the spindle (22) of the rotor bearing arrangement (100) in the operating state, and the generator (1) further comprises at least one locking device (62), which is designed to interact with a locking device (66) on the rotor (4), so that the rotor (4) can be locked in its specified position in the stator (2) in the assembled state.

2. Generator (1) according to Claim 1, wherein the bearing arrangement (25) further comprises at least one bearing unit (36; 38) having an inner ring (40; 42) and an outer ring (44; 46), the bearing unit being arranged between the spindle (22) and the bearing support (26), and wherein the spindle (22) is arranged in such a way that the at least one inner ring (40; 42) is connected to the spindle (22) so as to rotate with it and the at least one outer ring (44; 46) is connected to the bearing support (26) so as to rotate with it.

3. Generator (1) according to Claim 1 or 2, wherein the spindle (22) further has a radially extending flange (22b), which is designed to be connectable to the stationary housing (8), which surrounds the generator (1).

4. Generator (1) according to Claim 3, wherein the housing (8) and/or the flange (22b) has at least one passage opening (30), wherein a plurality of circumferentially distributed passage openings are preferably provided.

5. Generator (1) according to any of the preceding claims, wherein the bearing support (26) further has a radially extending flange section (26b), which preferably has a plurality of circumferentially distributed, axially extending fastening means receptacles (28), so that the bearing support (26) can be fastened to the rotor (4) by means of axially extending fastening means.

6. Generator (1) according to Claims 4 and 5, wherein the at least one passage opening (30) is formed as an axially extending passage opening, which is arranged coaxially in relation to the axially extending fastening means receptacles (28) of the bearing support (26).

7. Generator (1) according to any of the preceding claims, wherein at least one sealing arrangement (54), which is designed to seal off the bearing support interior (50) against the ingress of water, is further provided on at least one axial side, preferably on the side equipped with the bearing flange (26b), of the bearing arrangement (25).

8. Generator (1) according to any of the preceding claims, wherein a radially extending cover element (52), which is fastened to the hollow-cylindrical bearing support section (26a) and closes off the bearing support interior (50), is further provided, wherein the cover element (52) is preferably arranged on the side facing away from the sealing arrangement (54).

9. Generator (1) according to any of Claims 6 to 8, wherein the sealing arrangement (54) has a sealing lip support (58), which supports a plurality of sealing lips (56) and has a run-on sleeve (60) on which the plurality of sealing lips (56) run.

10. Generator (1) according to Claim 9, wherein the sealing lip support (58) is fastened to the spindle (22) and the run-on sleeve (60) is fastened to the bearing support (26), or the sealing lip support (58) is fastened to the bearing support (26) and the run-on sleeve (60) is fastened to the spindle (22).

## Revendications

1. Générateur (1) pour une centrale hydroélectrique avec un stator (2) et un rotor interne (4), qui sont agencés dans un boîtier (8), le stator (2) étant relié au boîtier (8) de manière solidaire en rotation et le rotor (4) présentant un support de rotor (12), qui est conçu pour porter radialement à l'extérieur des paquets de tôles de rotor ou des aimants permanents de rotor (10) et qui définit radialement à l'intérieur un espace intérieur de rotor (13) de forme cylindrique, le rotor (4) pouvant en outre être positionné par rapport au stator (2) à l'aide d'un agencement de palier de rotor (100), l'agencement de palier de rotor (100) présentant un tourillon stationnaire (22) conçu pour agencer le rotor (4) dans l'espace à l'intérieur du stator (2) et pour le maintenir à une distance prédéterminée du stator (2), et un agencement de palier (25), qui est conçu pour supporter le rotor (4) de manière rotative sur et autour du tourillon (22), l'agencement de palier (25) présentant un support de palier (26) pouvant être relié de manière solidaire en rotation au rotor (4) avec une section de support de palier cylindrique creuse (26a), qui définit un espace intérieur de support de palier (50), et le tourillon (22) s'étendant dans l'espace intérieur de support de palier (50), la section de support de palier cylindrique creuse (26a) étant dimensionnée de manière à pouvoir être insérée dans un espace intérieur de rotor (13) défini par le rotor (4) et à pouvoir être reliée de manière amovible au rotor (4), de telle sorte que le tourillon (22) et l'agencement de palier (25) sont réalisés sous forme d'unité de montage qui peut être insérée dans son ensemble dans l'espace intérieur de rotor (13) et peut être démontée de l'espace intérieur de rotor (13), et le boîtier de générateur (8) présentant en outre une section de boîtier (8d) s'étendant radialement vers l'intérieur qui, en état de fonctionnement, est reliée au tourillon (22) de l'agencement de palier de rotor (100), et le générateur (1) présentant en outre au moins un dispositif de blocage (62) qui est conçu pour coopérer avec un dispositif de blocage (66) sur le rotor (4), de telle sorte qu'en état de montage, le rotor (4) peut être bloqué dans le stator (2) dans sa position prédéfinie.

2. Générateur (1) selon la revendication 1, dans lequel l'agencement de palier (25) présente en outre au moins une unité de palier (36 ; 38) avec une bague intérieure (40 ; 42) et une bague extérieure (44 ; 46), qui est agencée entre le tourillon (22) et le support de palier (26), et dans lequel le tourillon (22) est agencé de telle sorte que l'au moins une bague intérieure (40 ; 42) est reliée de manière solidaire en rotation au tourillon (22) et l'au moins une bague extérieure (44 ; 46) est reliée de manière solidaire en rotation au support de palier (26).

3. Générateur (1) selon la revendication 1 ou 2, dans lequel le tourillon (22) présente en outre une bride s'étendant radialement (22b) conçue pour pouvoir être reliée au boîtier stationnaire (8) entourant le générateur (1).

4. Générateur (1) selon la revendication 3, dans lequel le boîtier (8) et/ou la bride (22b) présente au moins une ouverture de passage (30), plusieurs ouvertures de passage réparties sur la circonférence étant de préférence prévues.

5. Générateur (1) selon l'une quelconque des revendications précédentes, dans lequel le support de palier (26) présente en outre une section de bride s'étendant radialement (26b) présentant de préférence plusieurs logements de moyens de fixation s'étendant axialement, répartis sur la circonférence (28), de telle sorte que le support de palier (26) peut être fixé au rotor (4) au moyen de moyens de fixation s'étendant axialement.

6. Générateur (1) selon les revendications 4 et 5, dans lequel l'au moins une ouverture de passage (30) est réalisée sous forme d'ouverture de passage s'étendant axialement, qui est agencée coaxialement avec les logements de moyens de fixation s'étendant axialement (28) du support de palier (26).

7. Générateur (1) selon l'une quelconque des revendications précédentes, dans lequel, sur au moins un côté axial, de préférence sur le côté équipé de la bride de palier (26b), de l'agencement de palier (25), il est en outre prévu au moins un agencement d'étanchéité (54) conçu pour rendre étanche l'espace intérieur de support de palier (50) à l'encontre d'une pénétration d'eau.

8. Générateur (1) selon l'une quelconque des revendications précédentes, dans lequel il est en outre prévu un élément de couvercle (52) s'étendant radialement, qui est fixé à la section de support de palier cylindrique creuse (26a) et qui ferme l'espace intérieur de support de palier (50), l'élément de couvercle (52) étant de préférence agencé sur le côté détourné de l'agencement d'étanchéité (54).

9. Générateur (1) selon l'une quelconque des revendications 6 à 8, dans lequel l'agencement d'étanchéité (54) présente un support de lèvre d'étanchéité (58) portant plusieurs lèvres d'étanchéité (56) et présentant un manchon de butée (60) sur lequel viennent buter les plusieurs lèvres d'étanchéité (56).

10. Générateur (1) selon la revendication 9, dans lequel le support de lèvre d'étanchéité (58) est fixé au tourillon (22) et le manchon de butée (60) est fixé au support de palier (26), ou le support de lèvre d'étanchéité (58) est fixé au support de palier (26) et le manchon de butée (60) est fixé au tourillon (22).
